# EUROPEAN PATENT APPLICATION

(11) **EP 4 459 915 A1**
(43) Date of publication of application: **06.11.2024**
(21) Application number: 21969467.6
(22) Date of filing: 29.12.2021
(51) Int. Cl.: H04L 5/00

(54) **PHYSICAL DOWNLINK CONTROL CHANNEL RECEIVING AND TRANSMITTING METHODS AND APPARATUSES**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2021/142632
(87) International publication number: WO 2023/123099

(57) **Abstract**

The present disclosure relates to physical downlink control channel receiving and transmitting methods and apparatuses. A physical downlink control channel receiving method comprises: determining a receiving means for receiving a new radio physical downlink control channel (NR PDCCH) if a Long Term Evolution cell-specific reference signal (LTE CRS) conflicts with the NR PDCCH; and receiving the NR PDCCH according to the receiving means. According to the present disclosure, a terminal can determine a receiving means for receiving an NR PDCCH if an LTE CRS conflicts with the NR PDCCH, and receive the NR PDCCH according to the receiving means. Thus, the terminal can determine an appropriate receiving means as required, and receive an NR PDCCH if an LTE CRS conflicts with the NR PDCCH. Compared with the prior art, in which an NR PDCCH can only be received using a fixed receiving means, the present disclosure ensures that the receiving means adapts to an actual situation.

## Description

### TECHNICAL FIELD

The present disclosure relates to the field of communication technology, and in particular to physical downlink control channel receiving methods, physical downlink control channel transmitting methods, physical downlink control channel receiving apparatuses, physical downlink control channel transmitting apparatuses, communication devices, and computer-readable storage media.

### BACKGROUND

At present, a Long Term Evolution (LTE) system and a New Radio (NR) system can coexist on a same spectrum. The LTE system needs to continuously transmit Cell-specific Reference Signals (CRSs), which causes strong interference to the NR system.

In related arts, when a Resource Element (RE) for an LTE CRS conflicts with an RE for an NR PDCCH (Physical Downlink Control Channel), a terminal does not expect to receive an NR PDCCH on a conflicting RE.

### SUMMARY

In view of this, the embodiments of the present disclosure propose physical downlink control channel receiving methods, physical downlink control channel transmitting methods, physical downlink control channel receiving apparatuses, physical downlink control channel transmitting apparatuses, communication devices, and computer-readable storage media, to solve a technical problem in related arts.

According to the first aspect of the embodiments of the present disclosure, a physical downlink control channel receiving method is proposed, performed by a terminal, and includes: in response to determining that a Long Term Evolution Cell-specific Reference Signal (LTE CRS) conflicts with a New Radio Physical Downlink Control Channel (NR PDCCH), determining a receiving manner for receiving the NR PDCCH; and receiving the NR PDCCH according to the receiving manner.

According to the second aspect of the embodiments of the present disclosure, a physical downlink control channel transmitting method is proposed, performed by a network side device, and includes: in response to determining that a Long Term Evolution Cell-specific Reference Signal (LTE CRS) conflicts with a New Radio Physical Downlink Control Channel (NR PDCCH), determining a receiving manner for a terminal receiving the NR PDCCH; and transmitting indication information to the terminal, where the indication information is configured to indicate the receiving manner.

According to the third aspect of the embodiments of the present disclosure, a physical downlink control channel receiving apparatus is proposed, including: a processing module, configured to, in response to determining that a Long Term Evolution Cell-specific Reference Signal (LTE CRS) conflicts with a New Radio Physical Downlink Control Channel (NR PDCCH), determine a receiving manner for receiving the NR PDCCH; and a receiving module, configured to receive the NR PDCCH according to the receiving manner.

According to the fourth aspect of the embodiments of the present disclosure, a physical downlink control channel transmitting apparatus is proposed, including: a processing module, configured to, in response to determining that a Long Term Evolution Cell-specific Reference Signal (LTE CRS) conflicts with a New Radio Physical Downlink Control Channel (NR PDCCH), determine a receiving manner for a terminal receiving the NR PDCCH; and a transmitting module, configured to transmit indication information to the terminal, where the indication information is configured to indicate the receiving manner.

According to the fifth aspect of the embodiments of the present disclosure, a communication device is proposed, including: one or more processors; and one or more memories for storing a computer program; where when the computer program is executed by the one or more processors, the physical downlink control channel receiving method described above is implemented.

According to the sixth aspect of the embodiments of the present disclosure, a communication device is proposed, including: one or more processors; and one or more memories for storing a computer program; where when the computer program is executed by the one or more processors, the physical downlink control channel transmitting method described above is implemented.

According to the seventh aspect of the present embodiments of the present disclosure, a computer-readable storage medium is proposed for storing a computer program, where when the computer program is executed by one or more processors, the physical downlink control channel receiving method described above is implemented.

According to the eighth aspect of the present embodiments of the present disclosure, a computer-readable storage medium is proposed for storing a computer program, where when the computer program is executed by one or more processors, the physical downlink control channel transmitting method described above is implemented.

According to the embodiments of the present disclosure, the terminal can determine the receiving manner for receiving the NR PDCCH in response to determining that an LTE CRS conflicts with an NR PDCCH, and then receive the NR PDCCH according to the receiving manner. According to this, the terminal can determine an appropriate receiving manner as needed, and receive the NR PDCCH in a case of a conflict between LTE CRS and NR PDCCH, which is beneficial to ensure that the receiving manner adapts to an actual situation, compared to the related arts where an NR PDCCH can only be received in a fixed receiving manner.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present disclosure. For those skilled in the art, other drawings can also be obtained according to these drawings without creative effort.
FIG. 1 is a schematic flowchart of a physical downlink control channel receiving method according to embodiments of the present disclosure.
FIG. 2 is a schematic diagram of an LTE CRS according to embodiments of the present disclosure.
FIG. 3 is a schematic diagram illustrating a conflict between an NR PDCCH and an LTE CRS according to embodiments disclosed herein.
FIG. 4 is a schematic diagram of puncturing a second resource where an NR PDCCH is located according to a first resource corresponding to an LTE CRS, according to embodiments of the present disclosure.
FIG. 5 is a schematic diagram of rate matching of an NR PDCCH according to a first resource corresponding to an LTE CRS, according to embodiments of the present disclosure.
FIG. 6 is a schematic flowchart of another physical downlink control channel receiving method according to embodiments of the present disclosure.
FIG. 7 is a schematic flowchart of still another physical downlink control channel receiving method according to embodiments of the present disclosure.
FIG. 8 is a schematic flowchart of still another physical downlink control channel receiving method according to embodiments of the present disclosure.
FIG. 9 is a schematic flowchart of a physical downlink control channel transmitting method according to embodiments of the present disclosure.
FIG. 10 is a schematic flowchart of another physical downlink control channel transmitting method according to embodiments of the present disclosure.
FIG. 11 is a schematic flowchart of still another physical downlink control channel transmitting method according to embodiments of the present disclosure.
FIG. 12 is a schematic block diagram of a physical downlink control channel receiving apparatus according to embodiments of the present disclosure.
FIG. 13 is a schematic block diagram of a physical downlink control channel transmitting apparatus according to embodiments of the present disclosure.
FIG. 14 is a schematic block diagram of a device for physical downlink control channel transmission according to embodiments of the present disclosure.
FIG. 15 is a schematic block diagram of a device for physical downlink control channel reception according to embodiments of the present disclosure.

### DETAILED DESCRIPTION

The technical solutions in the embodiments of the present disclosure are clearly described below with reference to the accompanying drawings in the embodiments of the present disclosure. The embodiments described are merely some embodiments of the present disclosure, and not all embodiments. Other embodiments achieved by those skilled in the art according to the embodiments in the present disclosure without paying creative work shall all fall within the scope of protection of the present disclosure.

The term used in the embodiments of the present disclosure is for the purpose of describing particular examples only and is not intended to limit the embodiments of the present disclosure. As used in the present disclosure and the appended claims, the singular forms "a", "an" and "the" are intended to include the plural forms as well, unless the context clearly indicates otherwise. It should further be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. Depending on the context, the word "if" as used herein can be interpreted as "upon", "when" or "in response to determining".

For the purpose of simplicity and ease of understanding, the terms used in the present disclosure to represent comparison are "greater than", "less than", "higher than" or "lower than". But for those skilled in the art, it can be understood that the term "greater than" also encompasses the meaning of "greater than or equal to", "less than" also encompasses the meaning of "less than or equal to", "higher than" encompasses the meaning of "higher than or equal to", and "lower than" also encompasses the meaning of "lower than or equal to".

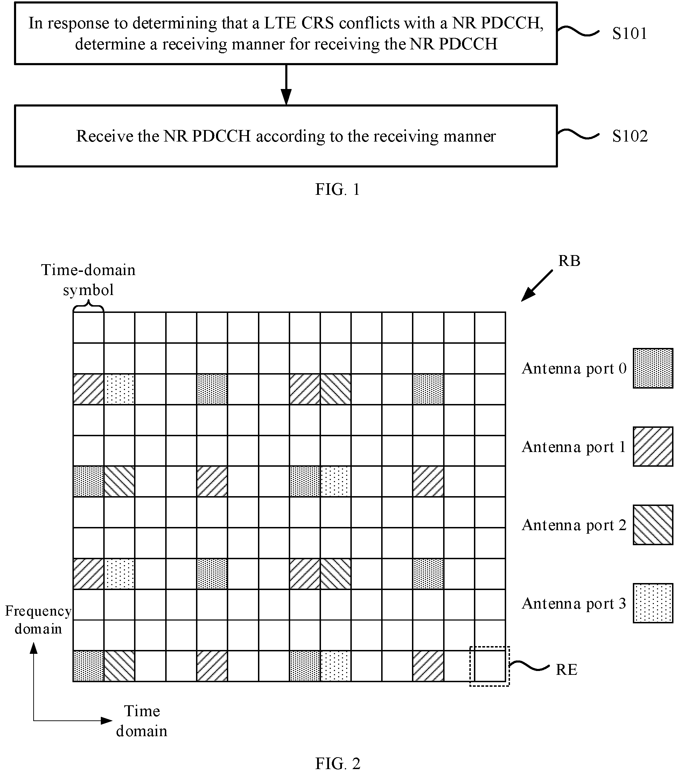

FIG. 1 is a schematic flowchart of a physical downlink control channel receiving method according to embodiments of the present disclosure. The physical downlink control channel receiving method shown in the embodiments can be performed by a terminal. The terminal includes but is not limited to a communication device such as a mobile phone, a tablet, a wearable device, a sensor, or an Internet of Things (IoT) device. The terminal can communicate with a network side device. The network side device includes but not limited to a network side device (such as a base station, a core network, etc.) in a communication system such as a 4G communication system, a 5G communication system, or a 6G communication system, etc.

As shown in FIG. 1, the physical downlink control channel receiving method may include the following steps S101 to S102.

In step S101, in response to determining that a Long Term Evolution Cell-specific Reference Signal (LTE CRS) conflicts with a New Radio Physical Downlink Control Channel (NR PDCCH), a receiving manner for receiving the NR PDCCH is determined.

In step S102, the NR PDCCH is received according to the receiving manner.

FIG. 2 is a schematic diagram of an LTE CRS according to embodiments of the present disclosure.

In an embodiment, for example, a Cell ID of an LTE cell is 0, an LTE CRS supports four ports, namely an antenna port 0, an antenna port 1, an antenna port 2, and an antenna port 3. LTE CRS corresponding to each antenna port occupies a different resource, and the resources occupied by the LTE CRS corresponding to the four antenna ports are stacked together as the first resource.

As shown in FIG. 2, in a Resource Block (RB), there are 14 symbols (such as orthogonal frequency division multiplexing (OFDM) symbols) in a time domain, and 12 Resource Elements (REs) in a frequency domain. For example, on one symbol, REs are numbered from bottom to top as RE #0 to RE #11, as shown in FIG. 2, and resources occupied by an LTE CRS include the first, second, fifth, eighth, ninth, and twelfth symbols on RE #0, RE #3, RE #6, and RE #9.

It should be noted that an LTE CRS can be transmitted by an LTE network side device, but an NR network side device can also determine the resources occupied by an LTE CRS, e.g., by communicating with an LTE network side device, or according to a protocol agreement. In addition, the terminal can also determine the resources occupied by LTE CRS, e.g., according to a protocol agreement.

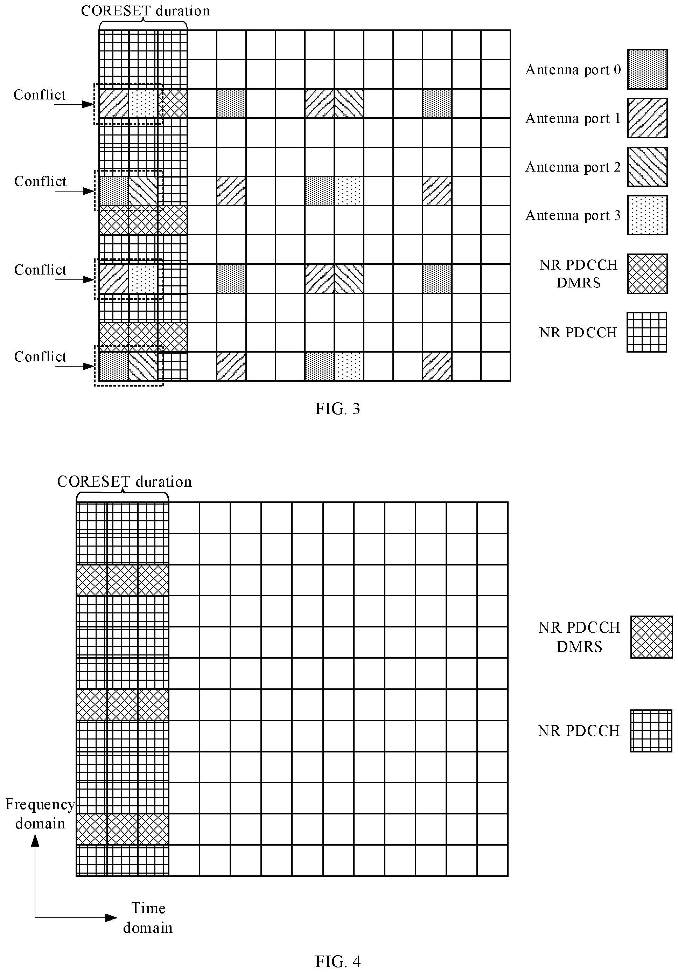

FIG. 3 is a schematic diagram illustrating a conflict between an NR PDCCH and an LTE CRS according to embodiments disclosed herein. As shown in FIG. 3, for example, if a duration of a control resource set (CORESET) is three time-domain symbols, such as the first three symbols in RB, for the REs used to carry an NR PDCCH in the CORESET, on the first and second symbols, the NR PDCCH carried by REs numbered RE #0, RE #3, and RE# 6 conflicts with the LTE CRS. Therefore, on these conflicting REs, the terminal does not expect to receive NR PDCCH, but on other REs in CORESET, the terminal still needs to receive NR PDCCH.

For example, as shown in FIG. 3, in addition to conflicts with the NR PDCCH, the LTE CRS can also conflict with NR PDCCH Demodulation Reference Signal (DMRS). For example, the RE #9 on the first and second symbols carries the NR PDCCH DMRS, which conflicts with the LTE CRS. On these conflicting REs, the terminal will not expect to receive NR PDCCH DMRS.

In related arts, for this case, the receiving manner for the terminal receiving the NR PDCCH is fixed and not determined as needed by the terminal or network side device, which makes it difficult for the receiving manner to adapt to the actual situation.

According to the embodiments of the present disclosure, the terminal can determine the receiving manner for receiving the NR PDCCH in response to determining that an LTE CRS conflicts with an NR PDCCH, and then receive the NR PDCCH according to the receiving manner. According to this, the terminal can determine an appropriate receiving manner as needed, and receive the NR PDCCH in a case of a conflict between LTE CRS and NR PDCCH, which is beneficial to ensure that the receiving manner adapts to an actual situation, compared to the related arts where an NR PDCCH can only be received in a fixed receiving manner.

In an embodiment, the receiving manner includes at least one of a first receiving manner or a second receiving manner.

The first receiving manner is puncturing a second resource where the NR PDCCH is located according to a first resource corresponding to the LTE CRS.

The second receiving manner is performing rate matching on the NR PDCCH according to a first resource corresponding to the LTE CRS.

For example, the receiving manners adopted by the terminal include two. One is to puncture a second resource where the NR PDCCH is located according to a first resource corresponding to the LTE CRS, abbreviated as the first receiving manner, and the other one is to perform rate matching on the NR PDCCH according to a first resource corresponding to the LTE CRS, abbreviated as the second receiving manner.

FIG. 4 is a schematic diagram of puncturing a second resource where an NR PDCCH is located according to a first resource corresponding to an LTE CRS, according to embodiments of the present disclosure.

For example, according to the embodiment shown in FIG. 3, in the case of a conflict between NR PDCCH and LTE CRS, the terminal determines to use the first receiving manner to receive NR PDCCH, that is, according to the first resource corresponding to LTE CRS, the terminal punctures the second resource where NR PDCCH is located. Therefore, for the terminal, the presence of the LTE CRS can be ignored, and an RE transmitting LTE CRS can be considered as transmitting NR PDCCH, and NR PDCCH can be detected on this basis. This manner is relatively simple to process, but it may result in the loss of NR PDCCH.

As shown in FIG. 4, for the terminal, when puncturing the second resource where NR PDCCH is located according to the first resource corresponding to LTE CRS, the terminal does not consider the presence of LTE CRS and considers all the REs in CORESET to be used for transmitting NR PDCCH and NR PDCCH DMRS, and detects and receives NR PDCCH based on this.

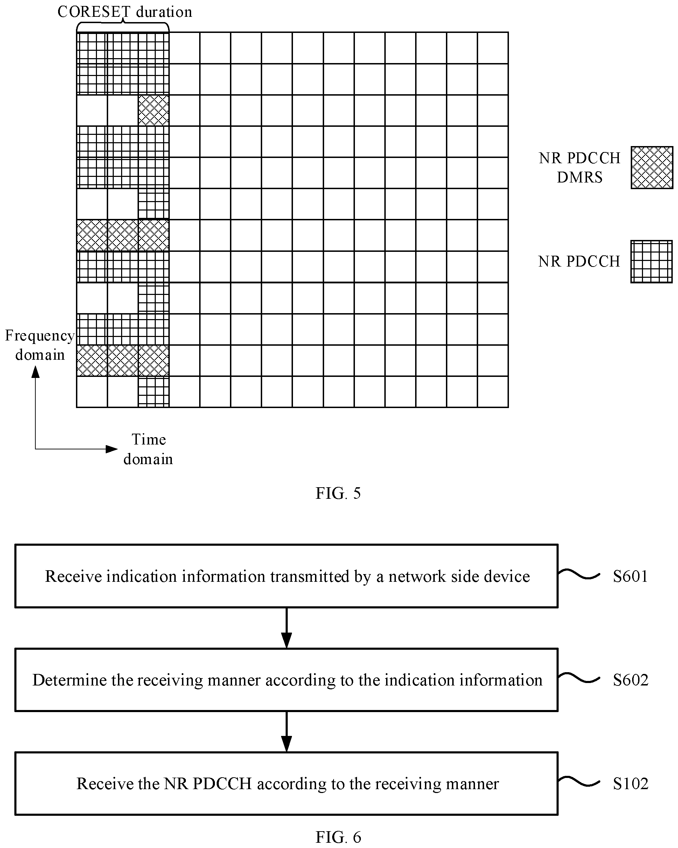

FIG. 5 is a schematic diagram of rate matching of an NR PDCCH according to a first resource corresponding to an LTE CRS, according to embodiments of the present disclosure.

For example, according to the embodiment shown in FIG. 3, in the case of the conflict between NR PDCCH and LTE CRS, the terminal determines to use a second receiving manner to receive NR PDCCH, that is, performs rate matching on NR PDCCH according to the first resource corresponding to LTE CRS. For the terminal, the presence of LTE CRS can be determined, and then rate matching is performed on NR PDCCH according to the first resource corresponding to LTE CRS, such as detecting and receiving NR PDCCH on an RE without LTE CRS. This manner has a relatively high processing complexity and improves the effective bit rate of Downlink Control Information (DCI) in NR PDCCH, but this manner can relatively ensure the integrity of NR PDCCH.

As shown in FIG. 5, for the terminal, when puncturing the second resource where NR PDCCH is located according to the first resource corresponding to LTE CRS, the terminal determines the existence of LTE CRS, determines that the REs used to transmit LTE CRS in CORESET are not used to transmit NR PDCCH and NR PDCCH DMRS, and detects and receives NR PDCCH based on this.

It should be noted that the first and second receiving manners mentioned above are the receiving manners for the terminal receiving NR PDCCH, and for the network side device, the transmitting manner used by the network side device cannot be restricted by the receiving manner selected by the terminal.

For example, the network side device can first map NR PDCCH on the REs in the CORESET, then remove the REs corresponding to the NR PDCCH from the REs occupied by the LTE CRS, and then transmit the NR PDCCH. For example, the network side device can also map the NR PDCCH on the REs within the CORESET and then transmit the NR PDCCH.

FIG. 6 is a schematic flowchart of another physical downlink control channel receiving method according to embodiments of the present disclosure. As shown in FIG. 6, in response to determining that the Long Term Evolution Cell-specific Reference Signal (LTE CRS) conflicts with the New Radio Physical Downlink Control Channel (NR PDCCH), determining the receiving manner for receiving the NR PDCCH includes steps S601-S602.

In step S601, indication information transmitted by a network side device is received.

In step S602, the receiving manner is determined according to the indication information.

In an embodiment, the network side device can indicate the receiving manner adopted by the terminal by transmitting indication information. For example, in he case where the receiving manner includes the first receiving manner and the second receiving manner mentioned above, the network side device can indicate the receiving manner to the terminal by one bit, as shown in Table 1:

**Table 1**

| Manner configuration information | NR PDCCH receiving manner |
|---|---|
| 0 | first receiving manner |
| 1 | second receiving manner |

For example, the terminal can store the corresponding relationship between the indication information and the receiving manner as shown in Table 1. The indication information being 0 indicates the first receiving manner, and the indication information being 1 indicates the second receiving manner.

According to this, the network side device can determine the receiving manner that the terminal needs to adopt according to the actual situation, and then indicate the corresponding receiving manner to the terminal through the indication information, which is conducive to ensuring that the receiving manner used by the terminal is adapted to the actual situation.

In an embodiment, the indication information is carried in at least one of: Radio Resource Control (RRC) signaling; or broadcast information.

In an embodiment, the network side device may transmit indication information to the terminal in a unicast manner, e.g., by carrying indication information through RRC signaling; or the network side device may transmit indication information to the terminal through broadcasting, e.g., by carrying indication information through broadcast information, where the broadcast information includes but is not limited to system information, or paging signaling, etc.

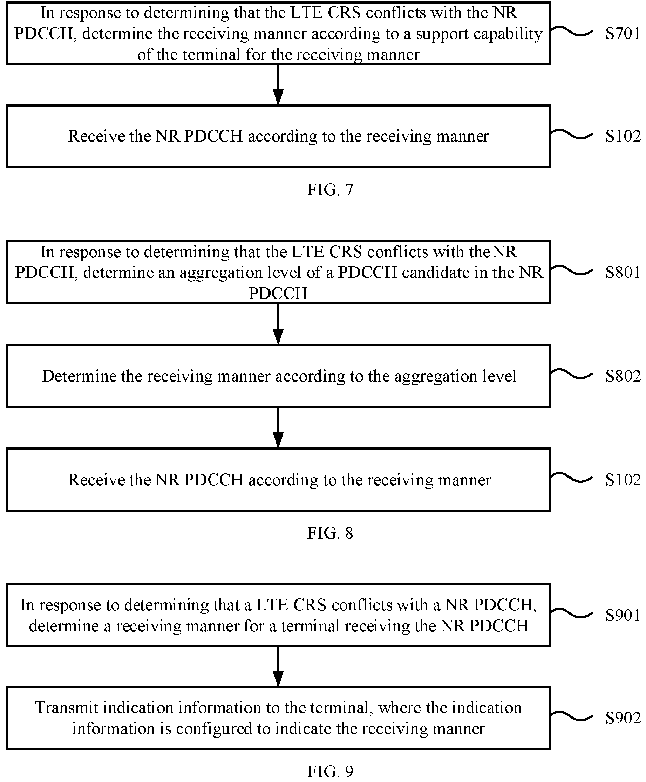

FIG. 7 is a schematic flowchart of still another physical downlink control channel receiving method according to embodiments of the present disclosure. As shown in FIG. 7, in response to determining that the Long Term Evolution Cell-specific Reference Signal (LTE CRS) conflicts with the New Radio Physical Downlink Control Channel (NR PDCCH), determining the receiving manner for receiving the NR PDCCH includes step S701.

In step S701, the receiving manner is determined according to a support capability of the terminal for the receiving manner.

In an embodiment, the terminal can determine its own support capability for the receiving manner, such as only supporting the first receiving manner, only supporting the second receiving manner, and supporting both the first and second receiving manners. According to the support capability, the terminal can determine the receiving manner for receiving NR PDCCH to ensure that the selected receiving manner is suitable for its own capability.

In an embodiment, determining the receiving manner according to the supporting capability of the terminal for the receiving manner includes:
in a case where the terminal only supports the first receiving manner, determining the first receiving manner as the receiving manner;
in a case where the terminal only supports the second receiving manner, determining the second receiving manner as the receiving manner;
in a case where the terminal supports the first receiving manner and the second receiving manner, determining a default manner in the first receiving manner and the second receiving manner as the receiving manner.

For example, if the terminal determines that the terminal only supports the first receiving manner, the terminal can choose to receive NR PDCCH according to the first method. For example, if the terminal determines that it only supports the second receiving manner, the terminal can choose to receive NR PDCCH according to the second method. Further, if the terminal determines that it supports both the first and second receiving manners, the terminal can choose to receive NR PDCCH according to a default manner, where the default manner can be the first receiving manner or the second receiving manner. For example, the default manner can be determined according to a protocol agreement. According to this, it can be ensured that the receiving manner chosen by the terminal is suitable for its own capabilities.

In an example, the method further includes:
reporting information of the support capability to the network side device.

The terminal can further report its own support capability information to the network side device, such that the network side device can perform appropriate operations according to the support capability of the terminal. For example, the network side device can indicate the receiving manner that the terminal needs to adopt according to the support capability of the terminal to the receiving manner.

It should be noted that the terminal can independently determine the receiving manner for NR PDCCH according to its own support capability for the receiving manner, or the terminal can first report its support capability for the receiving manner to the network side device, and then determine the receiving manner for NR PDCCH according to the indication information transmitted by the network side device based on the support capability.

FIG. 8 is a schematic flowchart of still another physical downlink control channel receiving method according to embodiments of the present disclosure. As shown in FIG. 8, in response to determining that the Long Term Evolution Cell-specific Reference Signal (LTE CRS) conflicts with the New Radio Physical Downlink Control Channel (NR PDCCH), determining the receiving manner for receiving the NR PDCCH includes steps S801 to S802.

In step S801, an aggregation level of a PDCCH candidate in the NR PDCCH is determined.

In step S802, the receiving manner is determined according to the aggregation level.

In an embodiment, several control channel elements (CCEs) can be aggregated into a PDCCH candidate, where the number of CCEs aggregated into the PDCCH candidate can be used as the aggregation level (AL). For example, the aggregation level includes but not limited to 1, 2, 4, 8, or 16, etc. The terminal can determine the aggregation level corresponding to the PDCCH candidate in NR PDCCH, and then determine the receiving manner according to the aggregation level, which can ensure that the adopted receiving manner meets the aggregation level of the PDCCH candidate.

It should be noted that the terminal can independently determine the receiving manner of NR PDCCH according to the aggregation level, or determine the receiving manner of NR PDCCH according to the indication information transmitted by the network side device according to the aggregation level.

In an embodiment, determining the receiving manner according to the aggregation level includes:
in response to determining that the aggregation level is greater than a first preset threshold, determining the first receiving manner as the receiving manner;
in response to determining that the aggregation level is less than or equal to the first preset threshold, determining the second receiving manner as the receiving manner.

In an embodiment, when the aggregation level is relatively high, such as greater than the first preset threshold, the terminal may receive NR PDCCH according to the first receiving manner; when the aggregation level is relatively low, such as less than or equal to the first preset threshold, the terminal may receive NR PDCCH according to the second receiving manner.

The first preset threshold can be determined according to a protocol agreement or indicated by the network side device. For example, when the aggregation levels include 1, 2, 4, 8, and 16, the first preset threshold can be 4, such that when the aggregation level is 1, 2, or 4, the second receiving manner can be used to receive NR PDCCH, and when the aggregation level is 8 or 16, the first receiving manner can be used to receive NR PDCCH.

Due to the relatively low aggregation level, the number of CCEs included in the PDCCH candidate is relatively less, and the number of CCEs is relatively less. Therefore, the CEs corresponding to NR PDCCH is also relatively less. In this case, if the first receiving manner is adopted, i.e., the second resource where NR PDCCH is located is punctured according to the first resource corresponding to LTE CRS, it will result in a large proportion of missing information in NR PDCCH, making it difficult to accurately detect NR PDCCH. Therefore, the second receiving manner can be adopted i.e., rate matching can be performed on NR PDCCH according to the first resource corresponding to the LTE CRS, to ensure the integrity of NR PDCCH as much as possible and ensure accurate detection of NR PDCCH.

When the aggregation level is relatively high, the number of CCEs included in the PDCCH candidate is relatively more, and the number of CCEs is relatively more. Therefore, the CEs corresponding to NR PDCCH is also relatively more. In this case, even if the first receiving manner is adopted, i.e., the second resource where NR PDCCH is located is punctured according to the first resource corresponding to LTE CRS, it will not cause a large proportion of missing information in NR PDCCH, but it can effectively reduce the complexity of detection and shorten the time for detecting NR PDCCH. Therefore, in this case, the first receiving manner can be used to receive NR PDCCH.

It should be noted that when the aggregation level is relatively high, the first receiving manner is used to receive NR PDCCH, and when the aggregation level is relatively low, the second receiving manner is used to receive NR PDCCH, which is only one of the multiple embodiments in the present disclosure, and the logic for determining the receiving manner according to the aggregation level can also be determined as needed. For example,

in an embodiment, determining the receiving manner according to the aggregation level includes: in response to determining that the aggregation level is greater than a second preset threshold, determining the second receiving manner as the receiving manner; in response to determining that the aggregation level is less than or equal to the second preset threshold, determining the first receiving manner as the receiving manner. The second preset threshold can be the same or different from the first preset threshold mentioned above.

The logic for determining the receiving manner according to the aggregation level can be determined according to a protocol agreement or indication information from the network side device.

FIG. 9 is a schematic flowchart of a physical downlink control channel transmitting method according to embodiments of the present disclosure. The physical downlink control channel transmitting method shown in the embodiments can be performed by a network side device, where the network side device can communicate with a terminal. The network side device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 9, the physical downlink control channel transmitting method may include the following steps S901 to S902.

In step S901, in response to determining that a Long Term Evolution Cell-specific Reference Signal (LTE CRS) conflicts with a New Radio Physical Downlink Control Channel (NR PDCCH), a receiving manner for a terminal receiving the NR PDCCH is determined.

In step S902, indication information is transmitted to the terminal, where the indication information is configured to indicate the receiving manner.

According to the embodiments of the present disclosure, the network side device can determine the receiving manner for the terminal receiving the NR PDCCH in response to determining that an LTE CRS conflicts with an NR PDCCH, and then receive the NR PDCCH according to the receiving manner. According to this, the network side device can determine an appropriate receiving manner as needed and indicate the receiving manner to the terminal, such that according to the indicated receiving manner, the terminal can receive the NR PDCCH in a case of a conflict between LTE CRS and NR PDCCH, which is beneficial to ensure that the receiving manner adapts to an actual situation, compared to the related arts where an NR PDCCH can only be received in a fixed receiving manner.

In an embodiment, the receiving manner includes at least one of a first receiving manner or a second receiving manner.

The first receiving manner is puncturing a second resource where the NR PDCCH is located according to a first resource corresponding to the LTE CRS.

The second receiving manner is performing rate matching on the NR PDCCH according to a first resource corresponding to the LTE CRS.

For example, the receiving manners adopted by the terminal include two. One is to puncture a second resource where the NR PDCCH is located according to a first resource corresponding to the LTE CRS, abbreviated as the first receiving manner, and the other one is to perform rate matching on the NR PDCCH according to a first resource corresponding to the LTE CRS, abbreviated as the second receiving manner.

FIG. 4 is a schematic diagram of puncturing a second resource where an NR PDCCH is located according to a first resource corresponding to an LTE CRS, according to embodiments of the present disclosure.

For example, according to the embodiment shown in FIG. 3, in the case of a conflict between NR PDCCH and LTE CRS, the terminal determines to use the first receiving manner to receive NR PDCCH, that is, according to the first resource corresponding to LTE CRS, the terminal punctures the second resource where NR PDCCH is located. Therefore, for the terminal, the presence of the LTE CRS can be ignored, and an RE transmitting LTE CRS can be considered as transmitting NR PDCCH, and NR PDCCH can be detected on this basis. This manner is relatively simple to process, but it may result in the loss of NR PDCCH.

As shown in FIG. 4, for the terminal, when puncturing the second resource where NR PDCCH is located according to the first resource corresponding to LTE CRS, the terminal does not consider the presence of LTE CRS and considers all the REs in CORESET to be used for transmitting NR PDCCH and NR PDCCH DMRS, and detects and receives NR PDCCH based on this.

FIG. 5 is a schematic diagram of rate matching of an NR PDCCH according to a first resource corresponding to an LTE CRS, according to embodiments of the present disclosure.

For example, according to the embodiment shown in FIG. 3, in the case of the conflict between NR PDCCH and LTE CRS, the terminal determines to use a second receiving manner to receive NR PDCCH, that is, performs rate matching on NR PDCCH according to the first resource corresponding to LTE CRS. For the terminal, the presence of LTE CRS can be determined, and then rate matching is performed on NR PDCCH according to the first resource corresponding to LTE CRS, such as detecting and receiving NR PDCCH on an RE without LTE CRS. This manner has a relatively high processing complexity and improves the effective bit rate of Downlink Control Information (DCI) in NR PDCCH, but this manner can relatively ensure the integrity of NR PDCCH.

As shown in FIG. 5, for the terminal, when puncturing the second resource where NR PDCCH is located according to the first resource corresponding to LTE CRS, the terminal determines the existence of LTE CRS, determines that the REs used to transmit LTE CRS in CORESET are not used to transmit NR PDCCH and NR PDCCH DMRS, and detects and receives NR PDCCH based on this.

It should be noted that the first and second receiving manners mentioned above are the receiving manners for the terminal receiving NR PDCCH, and for the network side device, the transmitting manner used by the network side device cannot be restricted by the receiving manner selected by the terminal.

For example, the network side device can first map NR PDCCH on the REs in the CORESET, then remove the REs corresponding to the NR PDCCH from the REs occupied by the LTE CRS, and then transmit the NR PDCCH. For example, the network side device can also map the NR PDCCH on the REs within the CORESET and then transmit the NR PDCCH.

In an embodiment, the indication information is carried in at least one of: RRC signaling; or broadcast information.

In an embodiment, the network side device may transmit indication information to the terminal in a unicast manner, e.g., by carrying indication information through RRC signaling; or the network side device may transmit indication information to the terminal through broadcasting, e.g., by carrying indication information through broadcast information, where the broadcast information includes but is not limited to system information, or paging signaling, etc.

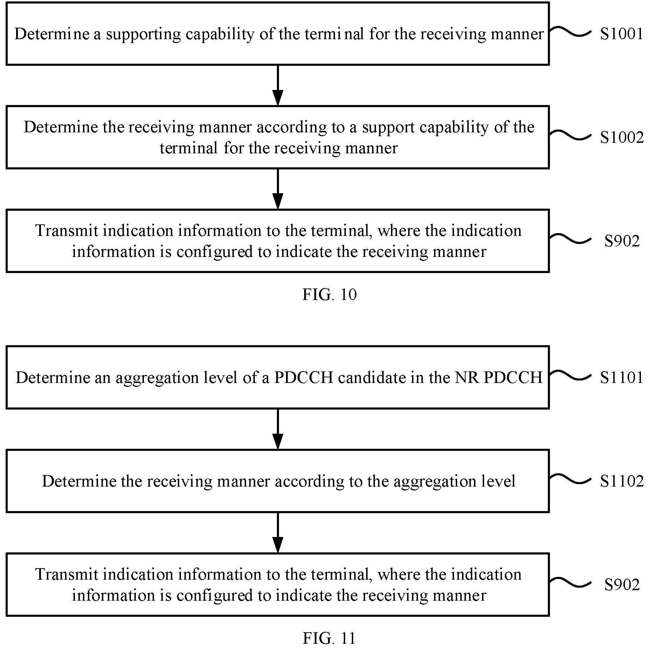

FIG. 10 is a schematic flowchart of another physical downlink control channel transmitting method according to embodiments of the present disclosure. As shown in FIG. 10, in response to determining that the Long Term Evolution Cell-specific Reference Signal (LTE CRS) conflicts with the New Radio Physical Downlink Control Channel (NR PDCCH), determining the receiving manner for the terminal receiving the NR PDCCH includes steps S1001 to S1002.

In step S 1001, a supporting capability of the terminal for the receiving manner is determined.

In step S 1002, the receiving manner is determined according to a support capability of the terminal for the receiving manner.

In an embodiment, the network side device can determine the support capability of the terminal for the receiving manner, such as only supporting the first receiving manner, only supporting the second receiving manner, and supporting both the first and second receiving manners. According to the support capability, the network side device can determine the receiving manner for the terminal receiving NR PDCCH to ensure that the receiving manner indicated to the terminal is suitable for the capability of the terminal.

In an embodiment, determining the receiving manner according to the supporting capability of the terminal for the receiving manner includes:
in a case where the terminal only supports the first receiving manner, determining the first receiving manner as the receiving manner;
in a case where the terminal only supports the second receiving manner, determining the second receiving manner as the receiving manner;
in a case where the terminal supports the first receiving manner and the second receiving manner, determining a default manner in the first receiving manner and the second receiving manner as the receiving manner.

For example, if the network side device determines that the terminal only supports the first receiving manner, the network side device can instruct the terminal to receive NR PDCCH according to the first method; for example, if the network side device determines that the terminal only supports the second receiving manner, the network side device can instruct the terminal to receive NR PDCCH according to the second method. Further, if the network side device determines that the terminal supports both the first and second receiving manners, the network side device can choose to instruct the terminal to receive NR PDCCH according to a default manner, where the default manner can be the first receiving manner or the second receiving manner. For example, the default manner can be determined according to a protocol agreement. According to this, it can be ensured that the receiving manner chosen by the terminal is suitable for its own capabilities.

In an example, the method further includes:
receiving information of the supporting capability reported by the terminal.

The terminal can further report its own support capability information to the network side device, such that the network side device can perform appropriate operations according to the support capability of the terminal. For example, the network side device can indicate the receiving manner that the terminal needs to adopt according to the support capability of the terminal to the receiving manner.

It should be noted that the terminal can independently determine the receiving manner for NR PDCCH according to its own support capability for the receiving manner, or the terminal can first report its support capability for the receiving manner to the network side device, and then determine the receiving manner for NR PDCCH according to the indication information transmitted by the network side device based on the support capability.

FIG. 11 is a schematic flowchart of still another physical downlink control channel transmitting method according to embodiments of the present disclosure. As shown in FIG. 11, in response to determining that the Long Term Evolution Cell-specific Reference Signal (LTE CRS) conflicts with the New Radio Physical Downlink Control Channel (NR PDCCH), determining the receiving manner for the terminal receiving the NR PDCCH includes steps S1101 to S1102.

In step S1101, an aggregation level of a PDCCH candidate in the NR PDCCH is determined.

In step S1102, the receiving manner is determined according to the aggregation level.

In an embodiment, CCEs can be aggregated into a PDCCH candidate, where the number of CCEs aggregated into a PDCCH candidate can be used as the aggregation level. For example, the aggregation level includes but not limited to 1, 2, 4, 8, or 16, etc. The network side device can determine the aggregation level corresponding to the PDCCH candidate in NR PDCCH, then determine the receiving manner according to the aggregation level, and indicate the receiving manner to the terminal, which can ensure that the receiving manner adopted by the terminal meets the aggregation level of the PDCCH candidate.

It should be noted that the terminal can independently determine the receiving manner of NR PDCCH according to the aggregation level, or determine the receiving manner of NR PDCCH according to the indication information transmitted by the network side device according to the aggregation level.

In an embodiment, determining the receiving manner according to the aggregation level includes:
in response to determining that the aggregation level is greater than a first preset threshold, determining the first receiving manner as the receiving manner;
in response to determining that the aggregation level is less than or equal to the first preset threshold, determining the second receiving manner as the receiving manner.

In an embodiment, when the aggregation level is relatively high, such as greater than the first preset threshold, the network side device can instruct the terminal to receive NR PDCCH according to the first receiving manner; when the aggregation level is relatively low, such as less than or equal to the first preset threshold, the network side device can instruct the terminal to receive NR PDCCH according to the second receiving manner.

The first preset threshold can be determined according to a protocol agreement or indicated by the network side device. For example, when the aggregation levels include 1, 2, 4, 8, and 16, the first preset threshold can be 4, such that when the aggregation level is 1, 2, or 4, the second receiving manner can be used to receive NR PDCCH, and when the aggregation level is 8 or 16, the first receiving manner can be used to receive NR PDCCH.

Due to the relatively low aggregation level, the number of CCEs included in the PDCCH candidate is relatively less, and the number of CCEs is relatively less. Therefore, the CEs corresponding to NR PDCCH is also relatively less. In this case, if the first receiving manner is adopted, i.e., the second resource where NR PDCCH is located is punctured according to the first resource corresponding to LTE CRS, it will result in a large proportion of missing information in NR PDCCH, making it difficult to accurately detect NR PDCCH. Therefore, the second receiving manner can be adopted i.e., rate matching can be performed on NR PDCCH according to the first resource corresponding to the LTE CRS, to ensure the integrity of NR PDCCH as much as possible and ensure accurate detection of NR PDCCH.

When the aggregation level is relatively high, the number of CCEs included in the PDCCH candidate is relatively more, and the number of CCEs is relatively more. Therefore, the CEs corresponding to NR PDCCH is also relatively more. In this case, even if the first receiving manner is adopted, i.e., the second resource where NR PDCCH is located is punctured according to the first resource corresponding to LTE CRS, it will not cause a large proportion of missing information in NR PDCCH, but it can effectively reduce the complexity of detection and shorten the time for detecting NR PDCCH. Therefore, in this case, the first receiving manner can be used to receive NR PDCCH.

It should be noted that when the aggregation level is relatively high, the first receiving manner is used to receive NR PDCCH, and when the aggregation level is relatively low, the second receiving manner is used to receive NR PDCCH, which is only one of the multiple embodiments in the present disclosure, and the logic for determining the receiving manner according to the aggregation level can also be determined as needed. For example,

in an embodiment, determining the receiving manner according to the aggregation level includes: in response to determining that the aggregation level is greater than a second preset threshold, determining the second receiving manner as the receiving manner; in response to determining that the aggregation level is less than or equal to the second preset threshold, determining the first receiving manner as the receiving manner. The second preset threshold can be the same or different from the first preset threshold mentioned above.

The logic for determining the receiving manner according to the aggregation level can be determined according to a protocol agreement or indication information from the network side device.

Corresponding to the embodiments of the physical downlink control channel receiving method and the physical downlink control channel transmitting method mentioned above, the present disclosure further provides embodiments of the physical downlink control channel receiving apparatus and the physical downlink control channel transmitting apparatus.

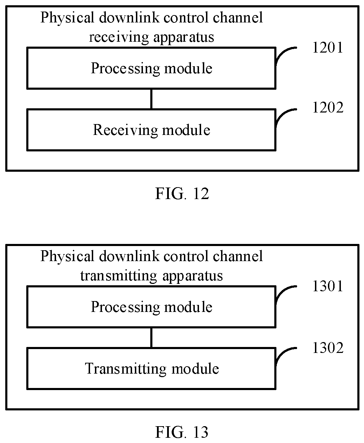

FIG. 12 is a schematic block diagram of a physical downlink control channel receiving apparatus according to embodiments of the present disclosure. The physical downlink control channel receiving apparatus shown in the embodiments can be applied to a terminal. The terminal includes but is not limited to a communication device such as a mobile phone, a tablet, a wearable device, a sensor, or an Internet of Things (IoT) device. The terminal can communicate with a network side device. The network side device includes but not limited to a network side device (such as a base station, a core network, etc.) in a communication system such as a 4G communication system, a 5G communication system, or a 6G communication system, etc.

As shown in FIG. 12, the physical downlink control channel receiving apparatus may include:
a processing module 1201, configured to, in response to determining that a Long Term Evolution Cell-specific Reference Signal (LTE CRS) conflicts with a New Radio Physical Downlink Control Channel (NR PDCCH), determine a receiving manner for receiving the NR PDCCH; and
a receiving module 1202, configured to receive the NR PDCCH according to the receiving manner.

In an embodiment, the receiving manner includes at least one of a first receiving manner or a second receiving manner.

The first receiving manner is puncturing a second resource where the NR PDCCH is located according to a first resource corresponding to the LTE CRS.

The second receiving manner is performing rate matching on the NR PDCCH according to a first resource corresponding to the LTE CRS.

In an embodiment, the processing module 1201 is configured to receive indication information transmitted by network side devices; and determine the receiving manner according to the indication information.

In an embodiment, the indication information is carried in at least one of: RRC signaling; or broadcast information.

In an embodiment, the processing module 1201 is configured to determine the receiving manner according to the support capability of the terminal for the receiving manner.

In an embodiment, the processing module 1201 is configured to, in a case where the terminal only supports the first receiving manner, determine the first receiving manner as the receiving manner; in a case where the terminal only supports the second receiving manner, determine the second receiving manner as the receiving manner; in a case where the terminal supports the first receiving manner and the second receiving manner, determine a default manner in the first receiving manner and the second receiving manner as the receiving manner.

In an embodiment, the apparatus further includes a transmitting module configured to report information of the support capability to the network side device.

In an embodiment, the processing module 1201 is configured to determine the aggregation level corresponding to the PDCCH candidate in the NR PDCCH; and determine the receiving manner according to the aggregation level.

In an embodiment, the processing module 1201 is configured to, in response to determining that the aggregation level is greater than a first preset threshold, determine the first receiving manner as the receiving manner; in response to determining that the aggregation level is less than or equal to the first preset threshold, determine the second receiving manner as the receiving manner.

In an embodiment, the processing module 1201 is configured to, in response to determining that the aggregation level is greater than a second preset threshold, determine the second receiving manner as the receiving manner; in response to determining that the aggregation level is less than or equal to the second preset threshold, determine the first receiving manner as the receiving manner.

FIG. 13 is a schematic block diagram of a physical downlink control channel transmitting apparatus according to embodiments of the present disclosure. The physical downlink control channel transmitting apparatus shown in the embodiments can be applied to a network side device, where the network side device can communicate with a terminal. The network side device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 13, the physical downlink control channel transmitting apparatus may include:
a processing module 1301, configured to, in response to determining that a Long Term Evolution Cell-specific Reference Signal (LTE CRS) conflicts with a New Radio Physical Downlink Control Channel (NR PDCCH), determine a receiving manner for a terminal receiving the NR PDCCH; and
a transmitting module 1302, configured to transmit indication information to the terminal, where the indication information is configured to indicate the receiving manner.

In an embodiment, the receiving manner includes at least one of a first receiving manner or a second receiving manner.

The first receiving manner is puncturing a second resource where the NR PDCCH is located according to a first resource corresponding to the LTE CRS.

The second receiving manner is performing rate matching on the NR PDCCH according to a first resource corresponding to the LTE CRS.

In an embodiment, the indication information is carried in at least one of: RRC signaling; or broadcast information.

In an embodiment, the processing module 1301 is configured to determine a support capability of the terminal for the receiving manner; and determine the receiving manner according to a support capability of the terminal for the receiving manner.

In an embodiment, the processing module 1201 is configured to, in a case where the terminal only supports the first receiving manner, determine the first receiving manner as the receiving manner; in a case where the terminal only supports the second receiving manner, determine the second receiving manner as the receiving manner; in a case where the terminal supports the first receiving manner and the second receiving manner, determine a default manner in the first receiving manner and the second receiving manner as the receiving manner.

In an embodiment, the device further includes a receiving module configured to receive information of the support capability reported by the terminal.

In an embodiment, the processing module 1301 is configured to determine the aggregation level corresponding to the PDCCH candidate in the NR PDCCH; and determine the receiving manner according to the aggregation level.

In an embodiment, the processing module 1301 is configured to, in response to determining that the aggregation level is greater than a first preset threshold, determine the first receiving manner as the receiving manner; in response to determining that the aggregation level is less than or equal to the first preset threshold, determine the second receiving manner as the receiving manner.

In an embodiment, the processing module 1301 is configured to, in response to determining that the aggregation level is greater than a second preset threshold, determine the second receiving manner as the receiving manner; in response to determining that the aggregation level is less than or equal to the second preset threshold, determine the first receiving manner as the receiving manner.

With regard to the device in the above examples, the specific manner in which the respective modules perform the operations has been described in detail in the examples of the related methods, and will not be explained in detail herein.

Since the device embodiments basically corresponds to the method embodiments, the relevant parts can refer to the partial description of the method embodiments. The device examples described above are merely illustrative, where the modules described as separate members may be or not be physically separated, and the members displayed as modules may be or not be physical units, i.e., may be located in one place, or may be distributed in a plurality of network modules. Part or all of the modules may be selected according to actual requirements to implement the objectives of the solutions in the examples. A person skilled in the art can understand and implement without creative work.

The embodiments of the present disclosure further provide a communication device, including: one or more processors; and one or more memories for storing a computer program; where when the computer program is executed by the one or more processors, the physical downlink control channel receiving method according to any one of the above embodiments is implemented.

The embodiments of the present disclosure further provide a communication device, including: one or more processors; and one or more memories for storing a computer program; where when the computer program is executed by the one or more processors, the physical downlink control channel transmitting method according to any one of the above embodiments is implemented.

The present embodiments of the present disclosure further provide a computer-readable storage medium for storing a computer program, where when the computer program is executed by one or more processors, the physical downlink control channel receiving method according to any one of the above embodiments is implemented.

The present embodiments of the present disclosure further provide a computer-readable storage medium for storing a computer program, where when the computer program is executed by one or more processors, the physical downlink control channel transmitting method according to any one of the above embodiments is implemented.

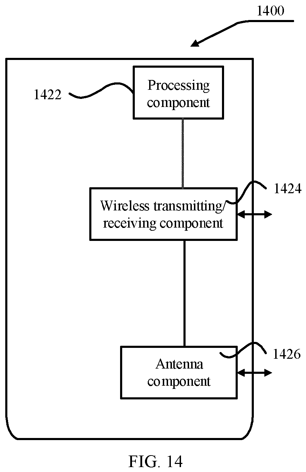

As shown in FIG. 14, FIG. 14 is a schematic block diagram of a device 1400 for physical downlink control channel transmission according to embodiments of the present disclosure. The device 1400 may be provided as a base station. Referring to FIG. 14, the device 1400 includes a processing component 1422, a wireless transmitting/receiving component 1424, an antenna component 1426, and a signaling processing portion specific to a wireless interface. The processing component 1422 may further include one or more processors. One of the processors in processing component 1422 can be configured to implement the physical downlink control channel transmitting method described in any one of the above embodiments.

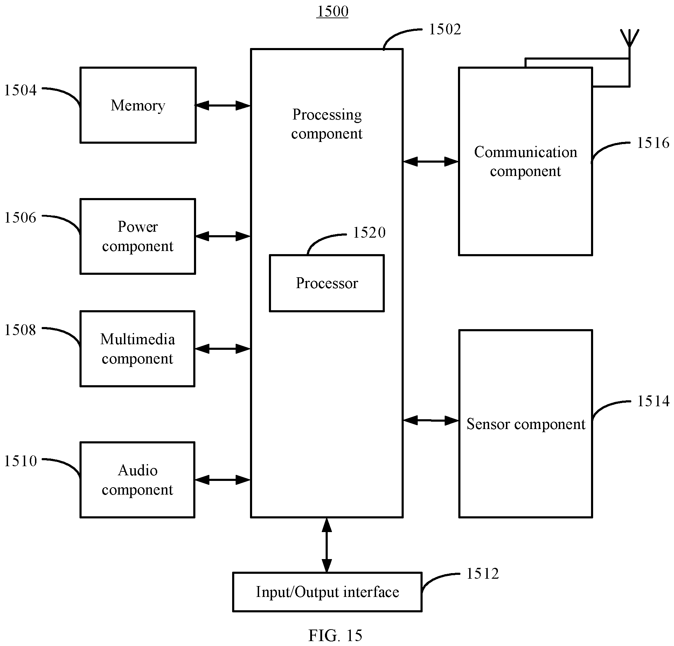

FIG. 15 is a schematic block diagram of a device 1500 for physical downlink control channel reception according to embodiments of the present disclosure. For example, device 1500 can be a mobile phone, a computer, a digital broadcast terminal, a message transmitting and receiving device, a gaming console, a tablet device, a medical device, a fitness device, a personal digital assistant, and the like.

Referring to FIG. 15, device 1500 can include one or more of the following components: processing component 1502, memory 1504, power component 1506, multimedia component 1508, audio component 1510, input/output (I/O) interface 1512, sensor component 1514, or a communication component 1516.

The processing component 1502 generally controls the overall operations of the electronic device 1500, such as operations associated with display, calling, data communication, camera operation and recording operation. The processing component 1502 may include one or more processors 1520 to execute instructions to complete all or part of the steps of the physical downlink control channel receiving method described above. Further, the processing component 1502 may include one or more modules to facilitate interaction between the processing component 1502 and another component. For example, the processing component 1502 may include a multimedia module to facilitate the interaction between the multimedia component 1508 and the processing component 1502.

The memory 1504 is configured to store different types of data to support the operations of the electronic device 1500. Examples of such data include instructions of any application program or method operable on the electronic device 1500, contact data, telephone directory data, messages, pictures, videos, and the like. The memory 1504 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 1506 provides power for different components of the electronic device 1500. The power supply component 1506 may include a power management system, one or more power sources, and other components associated with generating, managing and distributing power for the electronic device 1500.

The multimedia component 1508 may include a screen for providing an output interface between the electronic device 1500 and a user. In some examples, the screen may include a Liquid Crystal Display (LCD) and a Touch Panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 1508 may include a front camera and/or a rear camera. When the device 1500 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 1510 is configured to output and/or input an audio signaling. For example, the audio component 1510 may include a microphone (MIC). When the electronic device 1500 is in an operating mode, such as a call mode, a recording mode and a speech recognition mode, the microphone is configured to receive an external audio signal. The received audio signaling may be further stored in the memory 1504 or transmitted via the communication component 1516. In some examples, the audio component 1510 also includes a loudspeaker for outputting an audio signaling.

The I/O interface 1512 provides an interface between the processing component 1502 and a peripheral interface module which may be a keyboard, a click wheel, a button, or the like. These buttons may include but not limited to, a home button, a volume button, a start button and a lock button.

The sensor component 1514 may include one or more sensors for providing state assessments in different aspects for the electronic device 1500. For example, sensor component 1514 can detect an open/closed state of device 1500, a relative positioning of components, such as the display and keypad of device 1500, and sensor component 1514 can also detect a change in position of device 1500 or a component of device 1500, the presence or absence of user contact with device 1500, orientation or acceleration/deceleration of device 1500, and temperature change of device 1500. The sensor component 1514 may include a proximity sensor for detecting the existence of a nearby object without any physical touch. The sensor component 1514 may also include an optical sensor, such as a CMOS or CCD image sensor used in an imaging application. In some examples, the sensor component 1514 may also include an acceleration sensor, a gyro sensor, a magnetic sensor, a pressure sensor, or a temperature sensor.

The communication component 1516 is configured to facilitate wired or wireless communication between the electronic device 1500 and other devices. The device 1500 may access a wireless network according to a communication standard, such as WiFi, 2G, 3G, 4G LTE, 5G NR, or a combination thereof. In some embodiments, the communication component 1516 may receive a broadcast signaling or broadcast-related information from an external broadcast management system via a broadcast channel. In an example, the communication component 1516 may also include a Near Field Communication (NFC) module to facilitate short-range communications. For example, the NFC module may be implemented according to a Radio Frequency Identification (RFID) technology, an Infrared Data Association (IrDA) technology, an Ultra Wideband (UWB) technology, a Bluetooth^{®} (BT) technology and other technologies.

In an example, the apparatus 1500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the physical downlink control channel receiving method described above.

In an example, a non-transitory computer readable storage medium including instructions, such as the memory 1504 including instructions, is also provided. The above instructions may be executed by the processor 1520 of the apparatus 1500 to complete the above physical downlink control channel receiving method. For example, the non-transitory computer-readable storage medium may be a ROM, a RAM, a CD-ROM, a magnetic tape, a floppy disc, an optical data storage device, and the like.

After considering and practicing the disclosure of the specification, other embodiments of the present disclosure will be readily apparent to those skilled in the art. The present disclosure is intended to cover any modification, use or adaptation of the present disclosure. These modifications, uses or adaptations follow the general principles of the present disclosure and include common knowledge and conventional technical means in the technical field that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

It is to be noted that the relational terms such as "first" and "second" used herein are merely intended to distinguish one entity or operation from another entity or operation rather than to require or imply any such actual relation or order existing between these entities or operations. The term "including", "containing" or any variation thereof is intended to encompass non-exclusive inclusion, so that a process, method, article or device including a series of elements includes not only those elements but also other elements not listed explicitly or those elements inherent to such a process, method, article or device. Without further limitation, the element defined by the statement "including a ......" do not preclude the existence of additional identical elements in the process, method, article, or device that include the element.

The above provides a detailed introduction to the methods and apparatuses provided in the embodiments of the present disclosure. Specific examples are applied in the present disclosure to explain the principles and embodiments of the present disclosure. The explanations of the above embodiments are only used to help understand the methods and core ideas of the present disclosure. Meanwhile, for those skilled in the art, based on the idea of the present disclosure, there will be changes in the embodiments and application scopes. In summary, the content of the specification should not be construed as limiting the present disclosure.

## Claims

1. A physical downlink control channel receiving method, performed by a terminal, comprising:
in response to determining that a Long Term Evolution Cell-specific Reference Signal (LTE CRS) conflicts with a New Radio Physical Downlink Control Channel (NR PDCCH), determining a receiving manner for receiving the NR PDCCH; and
receiving the NR PDCCH according to the receiving manner.

2. The method according to claim 1, wherein the receiving manner comprises at least one of:
a first receiving manner of puncturing a second resource where the NR PDCCH is located according to a first resource corresponding to the LTE CRS; or
a second receiving manner of performing rate matching on the NR PDCCH according to a first resource corresponding to the LTE CRS.

3. The method according to claim 2, wherein in response to determining that the LTE CRS conflicts with the NR PDCCH, determining the receiving manner for receiving the NR PDCCH comprises:
receiving indication information transmitted by a network side device; and
determining the receiving manner according to the indication information.

4. The method according to claim 3, wherein the indication information is carried in at least one of:
radio resource control signaling; or
broadcast information.

5. The method according to claim 2, wherein in response to determining that the LTE CRS conflicts with the NR PDCCH, determining the receiving manner for receiving the NR PDCCH comprises:
determining the receiving manner according to a support capability of the terminal for the receiving manner.

6. The method according to claim 5, wherein determining the receiving manner according to the support capability of the terminal for the receiving manner comprises:
in a case where the terminal only supports the first receiving manner, determining the first receiving manner as the receiving manner;
in a case where the terminal only supports the second receiving manner, determining the second receiving manner as the receiving manner; and
in a case where the terminal supports the first receiving manner and the second receiving manner, determining a default manner in the first receiving manner and the second receiving manner as the receiving manner.

7. The method according to claim 5, further comprising:
reporting information of the support capability to a network side device.

8. The method according to claim 2, wherein in response to determining that the LTE CRS conflicts with the NR PDCCH, determining the receiving manner for receiving the NR PDCCH comprises:
determining an aggregation level of a PDCCH candidate in the NR PDCCH; and
determining the receiving manner according to the aggregation level.

9. The method according to claim 8, wherein determining the receiving manner according to the aggregation level comprises:
in response to determining that the aggregation level is greater than a first preset threshold, determining the first receiving manner as the receiving manner; and
in response to determining that the aggregation level is less than or equal to the first preset threshold, determining the second receiving manner as the receiving manner.

10. The method according to claim 8, wherein determining the receiving manner according to the aggregation level comprises:
in response to determining that the aggregation level is greater than a second preset threshold, determining the second receiving manner as the receiving manner; and
in response to determining that the aggregation level is less than or equal to the second preset threshold, determining the first receiving manner as the receiving manner.

11. A physical downlink control channel transmitting method, performed by a network side device, comprising:
in response to determining that a Long Term Evolution Cell-specific Reference Signal (LTE CRS) conflicts with a New Radio Physical Downlink Control Channel (NR PDCCH), determining a receiving manner for a terminal receiving the NR PDCCH; and
transmitting indication information to the terminal, wherein the indication information is configured to indicate the receiving manner.

12. The method according to claim 11, wherein the receiving manner comprises at least one of:
a first receiving manner of puncturing a second resource where the NR PDCCH is located according to a first resource corresponding to the LTE CRS; or
a second receiving manner of performing rate matching on the NR PDCCH according to a first resource corresponding to the LTE CRS.

13. The method according to claim 11, wherein the indication information is carried in at least one of:
radio resource control signaling; or
broadcast information.

14. The method according to claim 12, wherein in response to determining that the LTE CRS conflicts with the NR PDCCH, determining the receiving manner for the terminal receiving the NR PDCCH comprises:
determining a support capability of the terminal for the receiving manner; and
determining the receiving manner according to a support capability of the terminal for the receiving manner.

15. The method according to claim 14, wherein determining the receiving manner according to the support capability of the terminal for the receiving manner comprises:
in a case where the terminal only supports the first receiving manner, determining the first receiving manner as the receiving manner;
in a case where the terminal only supports the second receiving manner, determining the second receiving manner as the receiving manner; and
in a case where the terminal supports the first receiving manner and the second receiving manner, determining a default manner in the first receiving manner and the second receiving manner as the receiving manner.

16. The method according to claim 14, further comprising:
receiving information of the support capability reported by the terminal.

17. The method according to claim 12, wherein in response to determining that the LTE CRS conflicts with the NR PDCCH, determining the receiving manner for transmitting the NR PDCCH comprises:
determining an aggregation level of a PDCCH candidate in the NR PDCCH; and
determining the receiving manner according to the aggregation level.

18. The method according to claim 17, wherein determining the receiving manner according to the aggregation level comprises:
in response to determining that the aggregation level is greater than a first preset threshold, determining the first receiving manner as the receiving manner; and
in response to determining that the aggregation level is less than or equal to the first preset threshold, determining the second receiving manner as the receiving manner.

19. The method according to claim 17, wherein determining the receiving manner according to the aggregation level comprises:
in response to determining that the aggregation level is greater than a second preset threshold, determining the second receiving manner as the receiving manner; and
in response to determining that the aggregation level is less than or equal to the second preset threshold, determining the first receiving manner as the receiving manner.

20. A physical downlink control channel receiving apparatus, comprising:
a processing module, configured to, in response to determining that a Long Term Evolution Cell-specific Reference Signal (LTE CRS) conflicts with a New Radio Physical Downlink Control Channel (NR PDCCH), determine a receiving manner for receiving the NR PDCCH; and
a receiving module, configured to receive the NR PDCCH according to the receiving manner.

21. A physical downlink control channel transmitting apparatus, comprising:
a processing module, configured to, in response to determining that a Long Term Evolution Cell-specific Reference Signal (LTE CRS) conflicts with a New Radio Physical Downlink Control Channel (NR PDCCH), determine a receiving manner for a terminal receiving the NR PDCCH; and
a transmitting module, configured to transmit indication information to the terminal, wherein the indication information is configured to indicate the receiving manner.

22. A communication device, comprising:
one or more processors; and
one or more memories for storing a computer program;
wherein when the computer program is executed by the one or more processors, the physical downlink control channel receiving method according to any one of claims 1 to 10 is implemented.

23. A communication device, comprising:
one or more processors; and
one or more memories for storing a computer program;
wherein when the computer program is executed by the one or more processors, the physical downlink control channel transmitting method according to any one of claims 11 to 19 is implemented.

24. A computer-readable storage medium for storing a computer program, wherein when the computer program is executed by one or more processors, the physical downlink control channel receiving method according to any one of claims 1 to 10 is implemented.

25. A computer-readable storage medium for storing a computer program, wherein when the computer program is executed by one or more processors, the physical downlink control channel transmitting method according to any one of claims 11 to 19 is implemented.
